# EUROPÄISCHE PATENTSCHRIFT

(11) **EP 4 178 847 B1**
(45) Veröffentlichungstag und Bekanntmachung des Hinweises auf die Patenterteilung: **31.07.2024**
(21) Anmeldenummer: 21777722.6
(22) Anmeldetag: 15.09.2021
(51) Int. Cl.: B62D 5/30, B62D 5/09, B62D 5/065, B62D 5/12

(54) **HYDRAULISCHE SERVOLENKUNG**
HYDRAULIC POWER STEERING SYSTEM
DIRECTION ASSISTÉE HYDRAULIQUE

(30) Priorität: 07.10.2020 DE 102020006165
(43) Veröffentlichungstag der Anmeldung: 17.05.2023
(73) Patentinhaber: Hydac New Technologies GmbH, 66280 Sulzbach/ Saar (DE)
(72) Erfinder: BERGMANN, Erhard, 19079 Banzkow (Ortsteil Mirow) (DE); DE LA MOTTE, Markus, 19300 Muchow (DE); FUNK, Helmut, 19372 Karrenzin (DE)
(74) Vertreter: Bartels und Partner, Patentanwälte
(86) Internationale Anmeldenummer: PCT/EP2021/075293
(87) Internationale Veröffentlichungsnummer: WO 2022/073734

(56) Entgegenhaltungen:
- DE-A1- 10 324 949
- DE-A1- 19 855 405
- DE-C1- 19 615 544

## Beschreibung

Die Erfindung betrifft eine hydraulische Servolenkung, zumindest bestehend aus einem Lenkaktuator, für dessen Ansteuerung in gegenläufige Lenkrichtungen zwei Teilsysteme, jeweils in Form einer Stromregelventilanordnung mit einem Freigabeventil, dienen, und aus einer Fehlererkennungseinrichtung, mittels der zumindest eine fehlerhafte Komponente eines jeweiligen Teilsystems ermittelbar und deaktivierbar ist und mittels der die fehlerfreien Komponenten zumindest eines Teilsystems veranlassbar sind, die Ansteuerung des Lenkaktuators aufrechtzuerhalten.

DE 198 55 405 B4 offenbart eine hydraulische Servolenkung für Kraftfahrzeuge. Die Servolenkung weist ein fahrerseitig betätigbares Lenkhandrad, zwei hydraulisch doppeltwirkende Stellmotoren als Lenkaktuator, die beide mit denselben gelenkten Fahrzeugrädern zu deren Lenkverstellung gekoppelt sind, und eine elektronische Regelanordnung auf, die einen von dem Lenkhandrad betätigten Lenkwinkel-Sollwertgeber sowie einen mit den gelenkten Fahrzeugrädern betätigten Lenkwinkel-Istwertgeber aufweist.

Die Servolenkung ist aus Sicherheitsgründen redundant ausgelegt. So werden die Stellmotoren jeweils von einem Hydraulikkreis als Stromregelventilanordnung angesteuert, die einander entsprechen und von denen jeder allein den Lenkbetrieb übernehmen kann. Jeder Hydraulikkreis weist eine motorisch betätigte Servoventilanordnung mit einem Servoventil, ein Freilaufventil, das zwischen einer Sperrlage sowie einer beide Seiten des jeweiligen Stellmotors miteinander und mit einem Reservoir verbindenden Freilaufstellung umschaltbar ist, eine Hydraulikpumpe und eine Überwachungseinrichtung als Fehlererkennungseinrichtung auf. Das jeweilige Servoventil eines Hydraulikkreises wird von der Regelanordnung in Abhängigkeit von einem Lenkwinkel-Soll-Istwert-Vergleich geregelt und ist über einen Druckanschluß dieses Hydraulikkreises mit der Druckseite der Pumpe dieses Hydraulikkreises, über einen Niederdruckanschluß dieses Hydraulickreises mit der Saugseite der Pumpe dieses Hydraulikkreises und über zwei Motoranschlüsse dieses Hydraulikkreises mit den beiden Seiten des jeweiligen Stellmotors fluidführend verbunden. Bei einer mittels einer Sensorik erfassten Störung in einem der Hydraulikkreise öffnet die Überwachungseinrichtung das Freilaufventil dieses Hydraulikkreises, wodurch der als fehlerhaft erkannte Hydraulikkreis insgesamt in einen betriebsunwirksamen Zustand versetzt wird und der betriebswirksam verbleibende andere Hydraulikreis den Lenkbetrieb ausschließlich übernimmt.

Der Erfindung liegt die Aufgabe zugrunde eine hydraulische Servolenkung bereitzustellen, die demgegenüber eine höhere Betriebssicherheit gewährleistet.

Eine dahingehende Aufgabe löst eine hydraulische Servolenkung mit den Merkmalen des Patentanspruches 1 in seiner Gesamtheit.

Gemäß dem kennzeichnenden Teil des Anspruchs 1 ist die erfindungsgemäße hydraulische Servolenkung dadurch charakterisiert, dass jede Stromregelventilanordnung ein Zulauf- und ein Ablaufventil aufweist, die paarweise einander zugeordnet, als Stetigventile ausgebildet, mittels Ansteuersignalen elektrisch betätigbar sind, die mittels der Fehlererkennungseinrichtung miteinander verglichen, bei als relevant erkannten Abweichungen, zur Deaktivierung zumindest eines als fehlerhaft erkannten Ventiles führen.

Dadurch, dass jede Stromregelventilanordnung ein Zulauf- und ein Ablaufventil aufweist, ist nicht nur - wie im Stand der Technik - jedes Teilsystem in Form der Stromregelventilanordnung insgesamt redundant abgesichert, sondern ist darüber hinaus auch der Zu- und der Ablauf jeder Stromregelventilanordnung im Einzelnen absicherbar. So kann bei einem fehlerhaften Betrieb nur eines Zu- oder Ablaufventiles einer der Stromregelventilanordnungen, das jeweilige fehlerhafte Ventil dieser Stromregelventilanordnung gezielt außer Betrieb gesetzt werden, wobei gleichzeitig das andere Ventil dieser Stromregelventilanordnung in Betrieb bleibt. Dies hat zum Vorteil, dass bei insgesamt zwei fehlerhaften Ventilen, nämlich einem fehlerhaften Betrieb eines Zulaufventils und gleichzeitig einem fehlerhaften Betrieb eines Ablaufventils, der Lenkbetrieb aufrechterhalten werden kann, auch wenn beide fehlerhaften Ventile nicht Teil derselben Stromregelventilanordnung sind. Dadurch ist die Betriebssicherheit der Lenkung mit konstruktiv einfachen Mitteln verbessert. Dies hat so keine Entsprechung im Stand der Technik.

Bei einer besonders bevorzugten Ausführungsform der erfindungsgemäßen Servolenkung ist vorgesehen, dass die beiden Stromregelventilanordnungen im Normalbetrieb in einem festen Verhältnis zueinander, vorzugsweise zu jeweils 50% am Lenkvermögen, für den Lenkaktuator 10 teilnehmen. Dergestalt lässt sich ein besonders gutes, dynamisches Lenkverhalten erreichen. Vorzugsweise ist ferner dabei vorgesehen, dass bei zumindest einem fehlerhaft erkannten Ventil einer Stromregelventilanordnung diese deaktiviert wird und die Versorgung des Lenkaktuators von der jeweils anderen als gut erkannten Stromregelventilanordnung ausschließlich übernommen wird. Dergestalt ist sichergestellt, dass auch bei einem fehlerhaft geöffneten Ventil einer Stromregelventilanordnung diese sicher abgeschaltet wird und die zweite verbleibende Stromregelventilanordnung die Versorgung des Lenkaktuators nunmehr vollständig übernimmt.

Das jeweilige Stetigventil kann als Stromventil, insbesondere Stromregelventil, ausgebildet sein. Weitere Vorteile der erfindungsgemäßen Lösung sind Gegenstand der Unteransprüche.

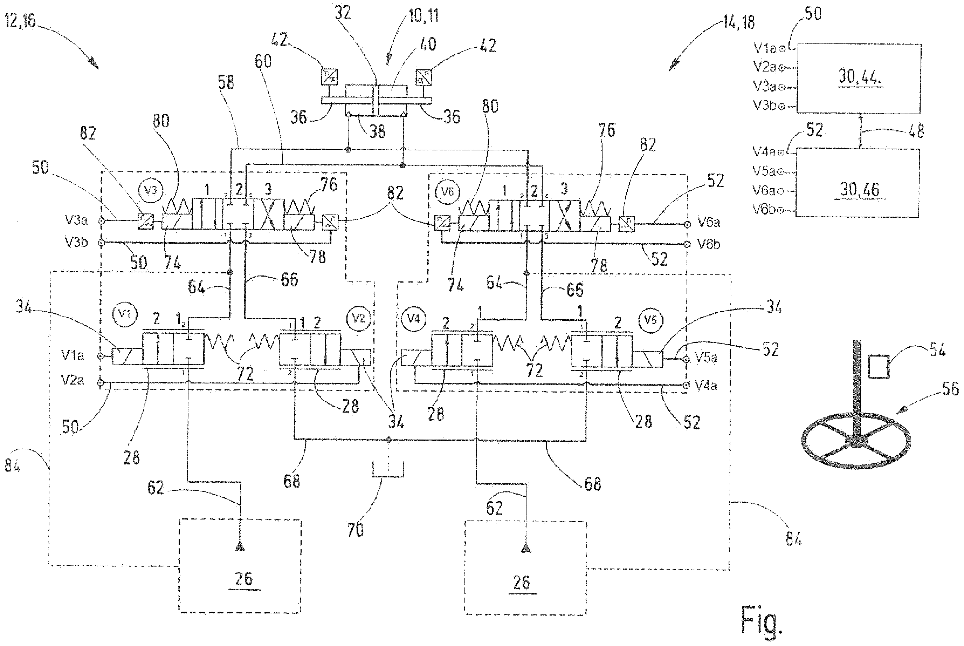

Im Folgenden wird die erfindungsgemäße hydraulische Servolenkung anhand der Zeichnung näher erläutert.

Die einzige Figur zeigt in prinzipieller und nicht maßstäblicher Darstellung in der Art eines hydraulischen Schaltplanes eine erfindungsgemäße hydraulische Servolenkung.

Die hydraulische Servolenkung weist einen Lenkaktuator 10 sowie ein erstes 12 und ein zweites 14 Teilsystem für eine Ansteuerung des Lenkaktuators 10 in gegenläufige Lenkrichtungen auf. Jedes Teilsystem 12, 14 ist in Form einer Stromregelventilanordnung 16, 18 ausgebildet, die ein Freigabe-V3, V6, ein Zulauf- V1, V4, ein Ablaufventil V2, V5 und eine Hydraulikdruckversorgung 26 aufweist. Die Zu- V1, V4 und Ablaufventile V2, V5 sind jeweils als Stetigventile 28 ausgebildet und neben den Freigabeventilen V3, V6 jeweils mittels Ansteuersignalen elektrisch betätigbar.

Des Weiteren weist die Servolenkung eine Fehlererkennungseinrichtung 30 auf, die derart eingerichtet ist, dass diese, wenn sich zumindest ein Zu- V1, V4 und/oder Ablaufventil V2, V5 als eine funktionswesentliche Komponente der jeweiligen Stromregelventilanordnung 16, 18 in einem Fehlerzustand befindet, basierend auf einem ins Verhältnis setzen der Ansteuersignale der Zu- V1, V4 und Ablaufventile V2, V5 zueinander und/oder zu einer durch diese Ansteuersignale bewirkten Verfahrbewegung eines Kolbens 32 des Lenkaktuators 10
- eine Abweichung des ermittelten Verhältnisses von einem Referenz-Verhältnis erkennt,
- basierend auf einer als relevant erkannten Abweichung das jeweilige Zu-V1, V4 und/oder Ablaufventil V2, V5 als fehlerhaft erkennt und deaktiviert, und
- die fehlerfreien Zu- V1, V4 und/oder Ablaufventile V2, V5 der beiden Teilsysteme 12, 14 veranlasst, die Ansteuerung des Lenkaktuators 10 aufrechtzuerhalten.

Zum ins Verhältnis setzen der Ansteuersignale der Zu- V1, V4 und Ablaufventile V2, V5, insbesondere zum Vergleichen dieser miteinander, wird der von einer ersten Betätigungsmagneteinrichtung 34 eines jeweiligen Stetigventiles 28 aufgenommene Strom an die Fehlererkennungseinrichtung 30 rückgemeldet und dort entsprechend ausgewertet.

Im fehlerfreien Lenkbetrieb übernimmt jede Stromregelventilanordnung 16, 18 permanent zu 50% die Ansteuerung des Lenkaktuators 10 mit Fluid in Form von Hydraulikflüssigkeit, insbesondere Öl. Sind Komponenten einer Stromregelventilanordnung 16, 18 zumindest teilweise fehlerbehaftet, kann sich das Ansteuerverhältnis der ersten 16 zu der zweiten 18 Stromregelventilanordnung bis auf 0% zu 100% oder umgekehrt ändern. Derart ausgebildet ist die Servolenkung durch eine sogenannte heiße Redundanz abgesichert, die im fehlerhaften Zustand der Servolenkung ungewollte und dadurch gegebenenfalls gefährliche Lenkbewegungen wirksam verhindert. Ein dahingehender Fehlerzustand kann beispielsweise ein Klemmen eines Ventilschiebers eines Ventils als Komponente der Servolenkung sein. Für einen besonders funktionssicheren Betrieb ist jedoch vorgesehen, dass nicht nur ein fehlerhaft erkanntes Ventil vom weiteren Betrieb ausgenommen wird, sondern dass jeweils die zugeordnete Stromregelventilanordnung mit ihren beiden Ventilen vollständig abgeschaltet wird und die verbleibende Stromregelventilanordnung ausschließlich die Versorgung für den Lenkaktuator übernimmt, was ohne zeitliche Verzögerung vonstatten geht, so dass dem Bediener vom Ansteuerverhalten her ein Ventilfunktionsfehler überhaupt nicht auffällt.

Der Lenkaktuator 10 ist als einzelner Gleichgangzylinder 11, auch Gleichlaufzylinder genannt, ausgebildet, der auf beiden Seiten seines Kolbens 32 jeweils eine Kolbenstange 36 als Teil eines in der Figur nicht dargestellten Lenkgetriebes für einzuschlagende Fahrzeugräder eines Fahrzeuges aufweist. Der Lenkaktuator 10 kann auch als zwei kreuzverbundene Differenzialzylinder ausgebildet sein. Der Kolben 32 trennt einen ersten Fluidraum 38 im Gehäuse des Lenkaktuators 10 von einem zweiten Fluidraum 40 im Gehäuse des Lenkaktuators 10. Der Lenkaktuator 10 ist mit einer üblichen Positionsüberwachung 42 als Teil der Fehlererkennungseinrichtung 30 versehen, die zur Überwachung der Verfahrstellung seines Kolbens 32 dient.

Das jeweilige Freigabeventil V3, V6 ist als 4/3-Wegeventil ausgebildet. Die jeweils als Stetigventile 28 bereitgestellten Zu- V1, V4 und Ablaufventile V2, V5 sind jeweils in Form eines 2/2-Wege-Proportionalventils zur Last unabhängigen Steuerung eines Volumenstroms ausgebildet. Die Freigabeventile V3, V6 der beiden Stromregelventilanordnungen 16, 18 sind baugleich und die Stetigventile 28 der beiden Stromregelventilanordnungen 16,18 sind ebenfalls baugleich ausgebildet.

Die Fehlererkennungseinrichtung 30 ist Teil einer ersten 44 und zweiten 46 Lenk-Steuereinrichtung, die über eine elektrische Signalleitung 48 miteinander verbunden sind. Die erste 44 und die zweite 46 Lenk-Steuereinrichtung ist über weitere elektrische Signalleitungen 50, 52 mit der ersten 16 bzw. der zweiten 18 Stromregelventilanordnung und über eine in der Figur nicht dargestellte weitere elektrische Signalleitung mit der Positionsüberwachung 42 des Lenkaktuators 10 verbunden. Zudem ist jede Lenk-Steuereinrichtung 44, 46 mit einem Lenkwinkel-Sollwertgeber 54 eines Lenkrades 56 des in der Figur nicht dargestellten Fahrzeuges, beispielsweise in Form einer Arbeitsmaschine, elektrisch verbunden. Die Arbeitsmaschine kann als sogenannte "off-highway"-Maschine (Fahrgeschwindigkeit bis zu 60 km/h), jedoch vorzugsweise mit Straßenzulassung, ausgebildet sein, wie beispielsweise in Form eines Traktors, eines Radbaggers, eines Radladers, eines Mähdreschers oder eines raupengetriebenen Fahrzeuges. Soweit der Gesetzgeber entsprechende Regelungen trifft, ist die Servolenkung aber auch für normale Personenkraftfahrzeuge einsetzbar.

An den ersten 38 und den zweiten 40 Fluidraum des Lenkaktuators 10 ist das erste Teilsystem 12 in Form der ersten Stromregelventilanordnung 16 und das zweite Teilsystem 14 in Form der zweiten Stromregelventilanordnung 18 fluidführend angeschlossen. Im Einzelnen ist dabei der erste Fluidraum 38 des Lenkaktuators 10 über eine erste Fluidleitung 58 mit einem jeweiligen zweiten Anschluss V3.2, V6.2 der beiden Freigabeventile V3, V6 jeder Stromregelventilanordnung 16, 18 und der zweite Fluidraum 40 des Lenkaktuators 10 über eine zweite Fluidleitung 60 mit einem jeweiligen vierten Anschluss V3.4, V6.4 der Freigabeventile V3, V6 jeder Stromregelventilanordnung 16, 18 fluidführend verbunden.

Der Aufbau der zweiten Stromregelventilanordnung 18 entspricht dem Aufbau der ersten Stromregelventilanordnung 16, der im Folgenden stellvertretend für beide Stromregelventilanordnungen 16, 18 näher erläutert wird:
Die Hydraulikdruckversorgung 26 ist über eine dritte Fluidleitung 62 mit einem ersten Anschluss V1.1 des Zulaufventils V1 fluidführend verbunden, dessen zweiter Anschluss V1.2 über eine vierte Fluidleitung 64 mit einem ersten Anschluss V3.1 des Freigabeventiles V3 fluidführend verbunden ist. Ein dritter Anschluss V3.3 des Freigabeventils V3 ist über eine fünfte Fluidleitung 66 mit dem ersten Anschluss V2.1 des Ablaufventils V2 fluidführend verbunden, dessen zweiter Anschluss V2.2 über eine sechste Fluidleitung 68 mit einem Tank 70 fluidführend verbunden ist.

Der Ventilkolben des Zulaufventils V1 und des Ablaufventils V2 sind unabhängig voneinander jeweils mittels der ersten Betätigungsmagneteinrichtung 34 entgegen der Kraft eines ersten Energiespeichers in Form einer ersten Druckfeder 72 von ihrer in der Figur gezeigten jeweiligen ersten Endstellung 1, in der der jeweilige Ventilkolben die beiden Anschlüsse V1.1, V1.2, V2.1, V2.2 des jeweiligen Ventils V1, V2 voneinander trennt, in eine zweite Endstellung 2 bringbar, in der der jeweilige Ventilkolben die beiden Anschlüsse V1.1, V1.2, V2.1, V2.2 des jeweiligen Ventils V1, V2 über einen Fluidweg miteinander fluidführend verbindet. Ist der Betätigungsmagnet des jeweiligen Zu- V1 oder Ablaufventils V2 unbestromt, ist dieses Ventil V1, V2, wie in der Figur gezeigt, in seiner ersten Endstellung 1 gehalten.

Der Ventilkolben des Freigabeventils V3 ist in eine Verfahrrichtung mittels einer zweiten Betätigungsmagneteinrichtung 74 entgegen der Kraft eines zweiten Energiespeichers in Form einer zweiten Druckfeder 76 von seiner in der Figur gezeigten zweiten Schaltstellung 2 in seine erste Schaltstellung 1 bringbar und in eine entgegengesetzte Verfahrrichtung mittels einer dritten Betätigungsmagneteinrichtung 78 entgegen der Kraft eines dritten Energiespeichers in Form einer dritten Druckfeder 80 von seiner zweiten Schaltstellung 2 in seine dritte Schaltstellung 3 bringbar. Sind die beiden Betätigungsmagnete des Freigabeventils V3 unbestromt, ist das Freigabeventil V3 in seiner zweiten Schaltstellung 2 gehalten, die seiner mittleren Schaltstellung entspricht.

In der ersten Schaltstellung 1 des Ventilkolbens des Freigabeventils V3 verbindet der Ventilkolben den ersten Anschluss V3.1 mit dem zweiten Anschluss V3.2 und den vierten Anschluss V3.4 mit dem dritten Anschluss V3.3 des Freigabeventils V3 fluidführend, jeweils über einen zugeordneten Fluidweg. In der zweiten Schaltstellung 2 des Ventilkolbens des Freigabeventils V3 trennt der Ventilkolben sämtliche Anschlüsse V3.1, V3.2, V3.3, V3.4 des Freigabeventils V3 voneinander. In der dritten Schaltstellung 3 des Ventilkolbens des Freigabeventils V3 verbindet der Ventilkolben den ersten Anschluss V3 .1 mit dem vierten Anschluss V3.4 und den zweiten Anschluss V3.2 mit dem dritten Anschluss V3.3 des Freigabeventils V3 fluidführend, jeweils über einen weiteren Fluidweg.

An dem Freigabeventil V3 ist als Teil der Fehlererkennungseinrichtung 30 eine übliche Schaltstellungsüberwachung 82 für seinen Ventilkolben vorgesehen. An die vierte Fluidleitung 64 zwischen dem zweiten Anschluss V1.2 des Zulaufventils V1 und dem ersten Anschluss V3.1 des Freigabeventils V3 ist im Sinne eines hydraulischen Lastabgriffs mit ihrem einen Ende eine Load-Sensing-Leitung 84 angeschlossen, deren anderes Ende an die Hydraulikdruckversorgung 26 angeschlossen ist. Dadurch ist der Zulauf des Lenkaktuators 10 mit einem vorgebbaren Fluiddruck versorgbar.

Die erste Lenk-Steuereinrichtung 44 ist über jeweils eine weitere elektrische Signalleitung 50 mit den Betätigungsmagneteinrichtungen 34, 74, 78 des Freigabe- V3, des Zulauf- V1 und des Ablaufventils V2, zwecks Ansteuerung mittels der Ansteuersignale und/oder Rückmeldung des von der jeweiligen Betätigungsmagneteinrichtung 34, 74, 78 aufgenommenen Stromes, sowie mit der Schaltstellungsüberwachung 82 des Ventilkolbens des Freigabeventils V3, die jeweils Teil der ersten Stromregelventilanordnung 16 sind, elektrisch verbunden.

Im Folgenden wird die Funktion der erfindungsgemäßen hydraulischen Servolenkung näher erläutert:
Bei einer Drehbetätigung des Lenkrades 56 von einer Bedienperson wird von dem Lenkwinkel-Sollwertgeber 54 ein Sollwert der Lenkbewegung des Lenkrades 56 erfasst und an die beiden Lenk-Steuereinrichtungen 44, 46 übermittelt. Basierend auf dem Lenkwinkel-Sollwert steuert die erste 44 und die zweite Lenk-Steuereinrichtung 46 die erste 16 bzw. die zweite 18 Stromregelventilanordnung an. Gleichzeitig empfängt die erste 44 und die zweite 46 Lenk-Steuereinrichtung die Werte der Positionsüberwachung 42 des Lenkaktuators 10, der Schaltstellungsüberwachung 82 des Freigabeventiles V3, V6 und der Stromaufnahme der Betätigungsmagneteinrichtungen 34 der Stetigventile 28, jeweils der ersten 16 bzw. der zweiten 18 Stromregeleinrichtung.

Im fehlerfreien Normalbetrieb wird zum Verfahren des Kolbens 32 des Lenkaktuators 10 in eine Verfahrrichtung (in der Figur nach rechts) der erste Fluidraum 38 des Lenkaktuators 10 von jeder Hydraulikdruckversorgung 26 versorgt, über das jeweilige Zulaufventil V1, V4, dessen Ventilkolben in seiner zweiten Endstellung 2 angeordnet ist, und das jeweilige Freigabeventil V3, V6, dessen Ventilkolben in seiner ersten Schaltstellung 1 angeordnet ist. Gleichzeitig kann der zweite Fluidraum 40 des Lenkaktuators 10 zum Tank 70 hin entlastet werden, über das jeweilige Freigabeventil V3, V6, dessen Ventilkolben in seiner ersten Schaltstellung 1 angeordnet ist, und das jeweilige Ablaufventil V2, V5, dessen Ventilkolben in seiner zweiten Endstellung 2 angeordnet ist. Dadurch bewegt sich der Kolben 32 des Lenkaktuators 10 in die eine Verfahrrichtung und nimmt das Lenkgestänge unter Ausführung einer entsprechenden Lenkbewegung mit.

Zudem wird im Normalbetrieb zum Verfahren des Kolbens 32 des Lenkaktuators 10 in eine dieser Verfahrrichtung entgegengesetzte weitere Verfahrrichtung (in der Figur nach links) der zweite Fluidraum 40 des Lenkaktuators 10 von jeder Hydraulikdruckversorgung 26 versorgt, über das jeweilige Zulaufventil V1, V4, dessen Ventilkolben in seiner zweiten Endstellung 2 angeordnet ist, und das jeweilige Freigabeventil V3, V6, dessen Ventilkolben in seiner dritten Schaltstellung 3 angeordnet ist. Gleichzeitig kann der erste Fluidraum 38 des Lenkaktuators 10 zum Tank 70 hin entlastet werden, über das jeweilige Freigabeventil V3, V6, dessen Ventilkolben in seiner dritten Schaltstellung 3 angeordnet ist, und das jeweilige Ablaufventil V2, V5, dessen Ventilkolben in seiner zweiten Endstellung 2 angeordnet ist. Dadurch bewegt sich der Kolben 32 des Lenkaktuators 10 in die weitere Verfahrrichtung und nimmt das Lenkgestänge unter Ausführung einer entsprechenden Lenkbewegung mit.

Wird nun zumindest eines der Zu- V1, V4 und/oder Ablaufventile V2, V5 in einen Fehlerzustand versetzt, wird dies von der Fehlererkennungseinrichtung 30 basierend auf einem in Verhältnis setzen der Ansteuersignale der Zu- V1, V4 und Ablaufventile V2, V5 zueinander und/oder zu einer durch diese Ansteuersignale bewirkten Verfahrbewegung des Kolbens 32 des Lenkaktuators 10 erkannt und das jeweilige als fehlerhaft erkannte Zu- V1, V4 und/oder Ablaufventil V2, V5 deaktiviert. Weiterhin wird von der Fehlerkennungseinrichtung 30 die Teilhabe der Stromregelventilanordnungen 16, 18 an dem Lenkbetrieb, deren Verhältnis im Normalbetrieb 50% zu 50% beträgt, in Abhängigkeit der verbleibenden fehlerfreien Zu- V1, V4 und Ablaufventile V2, V5 neu aufgeteilt, die dann die Ansteuerung der Fluidräume 38, 40 des Lenkaktuators 10 übernehmen und somit den Lenkbetrieb aufrechterhalten. Mit der Neu-Aufteilung kann sich das Verhältnis der Teilhabe der Stromregelventilanordnungen 16, 18 an dem Lenkbetrieb ändern. Für eine erhöhte Sicherheit ist jedoch vorgesehen, dass die Stromregelventilanordnung 16, 18 mit dem jeweils fehlerhaft erkannten Verntil V1, V2 bzw. V4, V5 von der Versorgung ausgenommen und die verbleibende Stromregelventilanordnung 18, 16 vollständig die hydraulische Versorgung in ansteuernder Weise übernimmmt.

Für einen sicheren Betrieb der hydraulischen Servolenkung ist es weiter vorteilhaft, die Position eines Stellelementes eines elektrisch antreibbaren Aktuators zu erfassen, der im vorliegenden Fall der Anker eines Elektromagneten ist, der das jeweils eingesetzte Ventil, insbesondere Stetigventil, ansteuert.

WO 2004/ 013874 A1 gibt ein solches Verfahren zum Ermitteln der Ankerposition an und damit der eingenommenen Schaltstellung oder Verfahrposition für das zu überwachende Ventil. Dabei ergibt sich die Position des Stellelementes aus einem Vergleich des Quotienten aus Einschaltdauer oder Ausschaltdauer des zu dem Anker des Elektromagneten zugehörigen Spulenteils und der Summe von Einschaltdauer und Ausschaltdauer, sowie aus einem Vergleich der Summe von Einschaltdauer und Ausschaltdauer, mit jeweils abgespeicherten Referenzdaten. Die tatsächlich an der Betätigungsspule gemessenen Induktivitäten, geben einen Rückschluss auf die Ankerposition und diese wiederum erlaubt einen Rückschluss auf die zu betrachtende Ventilstellung. Durch Abgleich mit im Versuch ermittelten Referenzdaten, die auch im Rahmen eines Kennfelds abgelegt sein können, ergibt dies eine Aussage ob die Ventile V1, V2, V4, V5 insgesamt fehlerhaft sind und die Steuerung schaltet dann die zu dem jeweiligen Ventil zugehörige Stromregelventilanordnung 16 oder 18 ab. Zusätzlich oder alternativ kann auch vorgesehen sein, die Induktivität einer jeden einzelnen Ventil-Magnetspule mit dem Verfahren nach der WO 2004/013874 A1 fortlaufend zu überwachen und bei fehlerhaft erkanntem Ventil die zugehörige Stromregelventilanordnung 16, 18 außer Kraft zu setzen.

## Patentansprüche

1. Hydraulische Servolenkung, zumindest bestehend aus
- einem Lenkaktuator (10), für dessen Ansteuerung in gegenläufige Lenkrichtungen zwei Teilsysteme (12; 14), jeweils in Form einer Stromregelventilanordnung (16; 18) mit einem Freigabeventil (V3; V6), dienen, und aus
- einer Fehlererkennungseinrichtung (30), mittels der zumindest eine fehlerhafte Komponente (V1, V2; V4, V5) eines jeweiligen Teilsystems (12; 14) ermittelbar und deaktivierbar ist und mittels der die fehlerfreien Komponenten (V1, V2, V3; V4, V5, V6) zumindest eines Teilsystems (12; 14) veranlassbar sind, die Ansteuerung des Lenkaktuators (10) aufrechtzuerhalten, **dadurch gekennzeichnet, dass** jede Stromregelventilanordnung (16; 18) ein Zulauf- (V1; V4) und ein Ablaufventil (V2; V5) aufweist, die paarweise einander zugeordnet, als Stetigventile (28) ausgebildet, mittels Ansteuersignalen elektrisch betätigbar sind, die mittels der Fehlererkennungseinrichtung (30) miteinander verglichen, bei als relevant erkannten Abweichungen, zur Deaktivierung zumindest eines als fehlerhaft erkannten Ventiles (V1, V2, V3; V4, V5, V6) führen.

2. Servolenkung nach Anspruch 1, **dadurch gekennzeichnet, dass** die beiden Stromregelventilanordnungen (16; 18) im Normalbetrieb in einem festen Verhältnis zueinander, vorzugsweise zu jeweils 50%, am Lenkvermögen für den Lenkaktuator (10) teilnehmen.

3. Servolenkung nach Anspruch 1 oder 2, **dadurch gekennzeichnet, dass** bei zumindest einem fehlerhaft erkannten Ventil (V1, V2; V4, V5) einer Stromregelventilanordnung (16; 18) diese deaktiviert ist und die Versorgung des Lenkaktuators (10) von der jeweils anderen als fehlerfrei erkannten Stromregelventilanordnung (18; 16) übernommen ist.

4. Servolenkung nach einem der vorstehenden Ansprüche, **dadurch gekennzeichnet, dass** die beiden Freigabeventile (V3; V6) miteinander identisch sind, ebenso wie die vier Stetigventile (28) miteinander identisch sind.

5. Servolenkung nach einem der vorstehenden Ansprüche, **dadurch gekennzeichnet, dass** das jeweilige Freigabeventil (V3; V6) aus einem Wegeventil, insbesondere einem 4/3-Wegeventil, und das jeweilige Stetigventil (28) aus einem Stromregelventil, insbesondere einem 2/2-Wege-Proportionalventil, gebildet ist.

6. Servolenkung nach einem der vorstehenden Ansprüche, **dadurch gekennzeichnet, dass** die Freigabeventile (V3; V6) und die Stromregelventile (V1, V2; V4, V5) unbestromt in ihrer unbetätigten Sperrstellung (1, 2) gehalten sind.

7. Servolenkung nach einem der vorstehenden Ansprüche, **dadurch gekennzeichnet, dass** das jeweilige Freigabeventil (V3; V6) als Teil der Fehlererkennungseinrichtung (30) über eine Schaltstellungsüberwachung (82) für den Ventilkolben verfügt.

8. Servolenkung nach einem der vorstehenden Ansprüche, **dadurch gekennzeichnet, dass** alle Betätigungsmagneteinrichtungen (34, 74, 78) für die Freigabe- (V3; V6) und die Stromregelventile (V1, V2; V4, V5) mittels elektrischer Signalleitungen (52) an die Fehlererkennungseinrichtung (30) angeschlossen sind.

9. Servolenkung nach einem der vorstehenden Ansprüche, **dadurch gekennzeichnet, dass** zwischen dem jeweiligen Zulaufventil (V1; V4) und dem zugeordneten Freigabeventil (V3; V6) ein hydraulischer Lastabgriff (84) erfolgt, der an eine jeweils zugeordnete Hydraulikversorgung (26) weitergeleitet ist, die dieses Zulaufventil (V1; V4) mit Fluid vorgebbaren Druckes versorgt.

10. Servolenkung nach einem der vorstehenden Ansprüche, **dadurch gekennzeichnet, dass** der Lenkaktuator (10) aus einem hydraulischen Gleichgangzylinder (11) gebildet ist, dessen beide von einer Kolben-Stangeneinheit (32, 36) getrennten Fluidräume (38, 40) jeweils auf eine der beiden Ausgangsseiten (V3.2, V3.4; V6.2, V6.4) beider Freigabeventile (V3; V6) geschaltet sind.

11. Servolenkung nach einem der vorstehenden Ansprüche, **dadurch gekennzeichnet, dass** der Lenkaktuator (10) mittels einer Positionsüberwachung (42) als weiterer Teil der Fehlererkennungseinrichtung (30) überwacht ist.

## Claims

1. Hydraulic power steering system, consisting of at least
- a steering actuator (10), for the control of which in opposite steering directions two subsystems (12; 14), each in the form of a flow-control valve arrangement (16; 18) with a relief valve (V3; V6), are used, and of
- a fault detection device (30), by means of which at least one faulty component (V1, V2; V4, V5) of a respective subsystem (12; 14) can be determined and deactivated and by means of which the fault-free components (V1, V2, V3; V4, V5, V6) of at least one subsystem (12; 14) can be caused to maintain the control of the steering actuator (10), **characterised in that** each flow-control valve arrangement (16; 18) has an inlet valve (V1; V4) and a discharge valve (V2; V5), which are assigned to each other in pairs, are configured as continuous-control valves (28) and can be electrically actuated by means of control signals which, when compared with each other by means of the fault detection device (30), lead to the deactivation of at least one valve (V1, V2, V3; V4, V5, V6) which is detected as faulty in the event of deviations which are detected as relevant.

2. Power steering system according to claim 1, **characterised in that** in normal operation the two flow-control valve arrangements (16; 18) participate in the steering capability for the steering actuator (10) in a fixed ratio to each other, preferably 50% each.

3. Power steering system according to claim 1 or 2, **characterised in that** if at least one valve (V1, V2; V4, V5) of a flow-control valve arrangement (16; 18) is detected as faulty, this arrangement is deactivated and the supply to the steering actuator (10) is taken over by the respective other flow-control valve arrangement (18; 16) which is detected as fault-free.

4. Power steering system according to one of the preceding claims, **characterised in that** the two relief valves (V3; V6) are identical to each other, just as the four continuous-control valves (28) are identical to one another.

5. Power steering system according to one of the preceding claims, **characterised in that** the respective relief valve (V3; V6) is formed of a directional-control valve, in particular a 4/3-way valve, and the respective continuous-control valve (28) is formed of a flow-control valve, in particular a 2/2-way proportional valve.

6. Power steering system according to one of the preceding claims, **characterised in that** the relief valves (V3; V6) and the flow-control valves (V1, V2; V4, V5) are held in their unactuated blocking position (1, 2) when de-energised.

7. Power steering system according to one of the preceding claims, **characterised in that** the respective relief valve (V3; V6), as part of the fault detection device (30), has a switching position monitor (82) for the valve piston.

8. Power steering system according to one of the preceding claims, **characterised in that** all actuating solenoid devices (34, 74, 78) for the release valves (V3; V6) and the flow-control valves (V1, V2; V4, V5) are connected to the fault detection device (30) by means of electrical signal lines (52).

9. Power steering system according to one of the preceding claims, **characterised in that** a hydraulic load tap (84) takes place between the respective inlet valve (V1; V4) and the associated relief valve (V3; V6), which load tap is passed on in each case to an associated hydraulic supply (26) which supplies this inlet valve (V1; V4) with fluid of predefinable pressure.

10. Power steering system according to one of the preceding claims, **characterised in that** the steering actuator (10) is formed of a hydraulic synchronous cylinder (11), the two fluid chambers (38, 40) of which, separated by a piston/rod unit (32, 36), are each connected to one of the two output sides (V3.2, V3.4; V6.2, V6.4) of both relief valves (V3; V6).

11. Power steering system according to one of the preceding claims, **characterised in that** the steering actuator (10) is monitored by means of a position monitor (42) as a further part of the fault detection device (30).

## Revendications

1. Direction assistée hydraulique, consistant au moins en
- un actionneur (10) de direction, pour la commande duquel deux sous-systèmes (12 ; 14) sont utilisés dans des sens de guidage contraires, chacun sous la forme d'un ensemble (16 ; 18) de soupape de régulation de débit avec une soupape (V3 ; V6) de libération, et
- un dispositif (30) de détection de défaut, au moyen duquel au moins un composant (V1, V2 ; V4, V5) défectueux d'un sous-système (12 ; 14) respectif peut être déterminé et désactivé et au moyen duquel les composants (V1, V2, V3 ; V4, V5, V6) exempts de défaut d'au moins un sous-système (12 ; 14) peuvent être amenés à maintenir la commande de l'actionneur (10) de direction, **caractérisé en ce que** chaque ensemble (16 ; 18) de soupape de régulation de débit comporte une soupape (V1 ; V4) d'alimentation et une soupape (V2 ; V5) d'évacuation qui sont associées par paires l'une à l'autre, sont constituées sous la forme de soupapes (28) à réglage continu et peuvent être actionnées électriquement au moyen de signaux de commande qui, comparés entre eux par le dispositif (30) de détection de défauts, entraînent, en cas d'écarts détectés comme pertinents, la désactivation d'au moins une soupape (V1, V2, V3 ; V4, V5, V6) identifiée comme défectueuse.

2. Direction assistée suivant la revendication 1, **caractérisée en ce que** les deux ensembles (16 ; 18) de soupapes de régulation de débit, en fonctionnement normal, participent dans un rapport fixe l'un par rapport à l'autre, de préférence à 50% chacun, au débit de direction pour l'actionneur (10) de direction.

3. Direction assistée suivant la revendication 1 ou 2, **caractérisée en ce que**, lorsqu'au moins une soupape (V1, V2 ; V4, V5) d'un ensemble (16 ; 18) de soupapes de régulation de débit est identifiée comme étant défectueuse, cet ensemble est désactivé et l'alimentation de l'actionneur (10) de direction est assurée par l'autre (18 ; 16) ensemble de soupape de régulation de débit identifié comme étant non défectueux.

4. Direction assistée suivant l'une des revendications précédentes, **caractérisée en ce que** les deux soupapes (V3 ; V6) de libération sont identiques entre elles, de même que les quatre soupapes (28) à réglage continu sont identiques entre elles.

5. Direction assistée suivant l'une des revendications précédentes, **caractérisée en ce que** la soupape (V3 ; V6) de libération respective est constituée d'un distributeur, notamment d'un distributeur 4/3, et la soupape (28) à réglage continu respective est constituée d'une soupape de régulation de débit, notamment d'une soupape proportionnelle à 2/2 voies.

6. Direction assistée suivant l'une des revendications précédentes, **caractérisée en ce que** les soupapes (V3 ; V6) de libération et les soupapes (V1, V2 ; V4, V5) de régulation de débit sont maintenues non alimentées en courant dans leur position d'arrêt (1, 2) non activée.

7. Direction assistée suivant l'une des revendications précédentes, **caractérisée en ce que** la soupape (V3 ; V6) de libération respective, en tant que partie du dispositif (30) de détection de défaut, dispose d'un contrôle (82) de position de commutation du piston de soupape.

8. Direction assistée suivant l'une des revendications précédentes, **caractérisée en ce que** tous les dispositifs (34, 74, 78) d'électroaimants d'actionnement des soupapes (V3 ; V6) de libération et les soupapes (V1, V2 ; V4, V5) de régulation de débit sont reliés au dispositif (30) de détection de défauts au moyen de lignes (52) de signaux électriques.

9. Direction assistée suivant l'une des revendications précédentes, **caractérisée en ce qu'**entre la soupape (V1 ; V4) d'alimentation respective et la soupape (V3 ; V6) de libération associée, il se produit une prise de charge (84) hydraulique, qui est transmise à une alimentation (26) hydraulique respective associée, qui alimente cette soupape (V1 ; V4) d'alimentation en un fluide à une pression pouvant être définie à l'avance.

10. Direction assistée suivant l'une des revendications précédentes, **caractérisée en ce que** l'actionneur (10) de direction est formé d'un vérin (11) synchrone hydraulique, dont les deux chambres (38, 40) de fluide, séparées par une unité (32, 36) de tige de piston, communiquent respectivement avec l'un des deux côtés (V3.2, V3.4 ; V6.2, V6.4) de sortie des deux soupapes (V3 ; V6) de libération.

11. Direction assistée suivant l'une des revendications précédentes, **caractérisée en ce que** l'actionneur (10) de direction est contrôlé par un contrôle (42) de position en tant qu'autre partie du dispositif (30) de détection de défaut.
